(19) Europäisches Patentamt
European Patent Office
Office européen des brevets

(11) EP 4 169 953 A1

(12) **EUROPEAN PATENT APPLICATION**
published in accordance with Art. 153(4) EPC

(43) Date of publication:
**26.04.2023 Bulletin 2023/17**

(21) Application number: **21824926.6**

(22) Date of filing: **01.06.2021**

(51) International Patent Classification (IPC):
***C08B 15/06*** *(2006.01)* ***C08L 1/08*** *(2006.01)*
***C08L 101/00*** *(2006.01)* ***D06M 13/432*** *(2006.01)*

(52) Cooperative Patent Classification (CPC):
**C08B 3/14; C08B 15/06; C08K 7/02; C08L 1/02; C08L 1/08; C08L 101/00; D06M 13/432**

(86) International application number:
**PCT/JP2021/020862**

(87) International publication number:
**WO 2021/256247 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.06.2020 JP 2020104583**

(71) Applicant: **Daio Paper Corporation**
**Ehime 799-0492 (JP)**

(72) Inventor: **IMAI, Takaaki**
**Shikokuchuo-shi, Ehime 799-0492 (JP)**

(74) Representative: **Meissner Bolte Partnerschaft mbB**
**Patentanwälte Rechtsanwälte**
**Postfach 86 06 24**
**81633 München (DE)**

# (54) FIBROUS CELLULOSE AND FIBROUS CELLULOSE COMPOSITE RESIN

(57) Provided are fibrous cellulose excellent in heat resistance and reinforcing effect on resins, and fibrous cellulose composite resins having high strength. The fibrous cellulose has an average fiber width of 0.1 to 19 μm, has hydroxyl groups substituted with carbamate groups at a rate of substitution of 1.0 to 2.0 mmol/g, and has an average fiber length of 0.10 mm or longer. The fibrous cellulose composite resin contains the fibrous cellulose and a resin.

EP 4 169 953 A1

## Description

FIELD OF ART

The present invention relates to fibrous cellulose and a fibrous cellulose composite resin.

BACKGROUND ART

Fine fibers like cellulose nanofibers and microfiber cellulose (microfibrillated cellulose) have recently been attracting attention for their application to reinforcing materials for resins. However, fine fibers are hydrophilic, whereas resins are hydrophobic, so that fine fibers, for use as a reinforcing material for resins, have problems with dispersibility. In view of this, there has been proposed a method for producing modified cellulose nanofibers, characterized in that a step of causing cellulose having hydroxyl groups to react with a resin having an intramolecular polybasic anhydride structure to obtain modified cellulose and a step of miniaturizing the modified cellulose are performed in the same step, wherein the polybasic anhydride structure is a cyclic polybasic anhydride structure obtained by ring formation through dehydration condensation of carboxyl groups in the molecule (Patent Publication 1). This proposal is aimed at providing a simple method for producing modified cellulose nanofibers that can be easily dispersed in solvents. In the method proposed in this publication, however, the problem of heat resistance arising in using cellulose fibers as a reinforcing material for resins, is not addressed. Cellulose fibers, for use as a reinforcing material for resins, are subjected to heat treatment at, for example, 150 to 250 °C during melt kneading with a resin. Accordingly, cellulose fibers are required to have excellent heat resistance.

PRIOR ART PUBLICATION

PATENT PUBLICATION

Patent Publication 1: JP 5656100 B
Patent Publication 2: JP 2019-001876 A

SUMMARY OF THE INVENTION

PROBLEM TO BE SOLVED BY THE INVENTION

It is a primary object of the present invention to provide fibrous cellulose excellent in heat resistance and reinforcing effect on resins, and fibrous cellulose composite resins having high strength.

MEANS FOR SOVLING THE PROBLEM

As mentioned above, fine fibers, for use as a reinforcing material for resins, have problems with dispersibility. In this light, there has been proposed substitution of hydroxyl groups in fine fibers (in particular, microfiber cellulose) with carbamate groups (carbamation) (Patent Publication 2). According to this proposal, dispersibility of the fine fibers is improved to thereby improve the reinforcing effect on resins. Given this premise, the present inventor has further conducted various experiments to find out that further improvement in reinforcing effect on resins may be attained by focusing on the rate of carbamation and the average fiber length of cellulose fibers. Through the experiments, on the other hand, the inventor has also found out that the improvement in reinforcing effect on resins is not always accompanied by excellent heat resistance. Based on this finding, the inventor has arrived at the following means.

<Means recited in Claim 1>

Fibrous cellulose having an average fiber width of 0.1 to 19 μm, having hydroxyl groups substituted with carbamate groups at a rate of substitution of 1.0 to 2.0 mmol/g, and having an average fiber length of 0.10 mm or longer.

<Means recited in Claim 2>

The fibrous cellulose according to claim 1,
wherein a 5% weight-loss temperature in heating from 105 °C to 350 °C at a rate of 5 °C per minute in absolutely dry

state is 240 °C or higher.

<Means recited in Claim 3>

A fibrous cellulose composite resin including the fibrous cellulose according to claim 1 or 2, and a resin.

<Means recited in Claim 4>

The fibrous cellulose composite resin according to claim 3,
wherein a content percentage of the fibrous cellulose is 1 to 80 mass%, and the content percentage of the resin is 20 to 90 mass%.

<Mean recited in Claim 5>

The fibrous cellulose composite resin according to claim 3 or 4,
wherein part or all of the resin is an acid-modified resin.

EFFECT OF THE INVENTION

According to the present invention, there are provided fibrous cellulose having excellent heat resistance and reinforcing effect on resins, and a fibrous cellulose composite resin having high strength.

EMBODIMENTS FOR CARRYING OUT THE INVENTION

Next, embodiments for carrying out the present invention will be discussed. The embodiments are mere examples of the present invention, and the scope of the present invention is not limited by the scopes of the present embodiments.

The fibrous cellulose (cellulose fiber) according to the present embodiment has an average fiber width (diameter) of 0.1 to 19 μm, i.e., is microfiber cellulose (microfibrillated cellulose), and has hydroxyl groups (-OH) partially or fully substituted with carbamate groups. According to the present embodiment, the rate of substitution with the carbamate groups is 1.0 to 2.0 mmol/g. The fibrous cellulose according to the present embodiment has an average fiber length of 0.10 mm or longer. Further, the fibrous cellulose composite resin contains the fibrous cellulose and a resin. Details are discussed below.

It should be understood that according to the present embodiment, fibrous cellulose having an average fiber width (diameter) of 0.1 to 19 μm is referred to as microfiber cellulose or microfibrillated cellulose or MFC.

<Fibrous Cellulose>

The fibrous cellulose according to the present embodiment is microfiber cellulose (microfibrillated cellulose) having an average fiber diameter of 0.1 to 19 μm. Use of microfiber cellulose significantly improves the reinforcing effect on resins. Further, microfiber cellulose is more easily modified with carbamate groups (carbamation) compared to cellulose nanofibers, which are another kind of fine fibers. Note that it is more preferred to subject a cellulose raw material to carbamation before the raw material is made finer. Here, the microfiber cellulose and the cellulose nanofibers are equivalent.

According to the present embodiment, the microfiber cellulose refers to fibers having a larger average fiber diameter (width) than that of cellulose nanofibers. Specifically, the microfiber cellulose has an average fiber diameter of, for example, 0.1 to 19 μm, preferably 0.2 to 15 μm, more preferably larger than 0.5 to 10 μm. With an average fiber diameter below (less than) 0.1 μm, the microfiber cellulose differs nothing from cellulose nanofibers, and sufficient effect to enhance resin strength (in particular, flexural modulus) may not be obtained. Also, a longer time is required for defibration, which in turn requires more energy. Further, dewaterability of a cellulose fiber slurry is impaired. With such an impaired dewaterability, a high amount of energy is required for drying, which in turn causes thermal deterioration of the microfiber cellulose to impair its strength. In particular, with an average fiber diameter of 50 nm or smaller, the thermal decomposition temperature is significantly lowered, which may impair the heat resistance to make the microfiber cellulose unsuitable for kneading with a resin. On the other hand, with an average fiber diameter over (exceeding) 19 μm, the microfiber cellulose differs nothing from pulp, and sufficient reinforcing effect may not be obtained.

According to the present embodiment, the average fiber diameter of fine fibers (microfiber cellulose and cellulose nanofibers) is measured as follows.

First, 100 ml of an aqueous dispersion of fine fibers having a solid concentration of 0.01 to 0.1 mass% is filtered

through a TEFLON (registered trademark) membrane filter, and subjected to solvent substitution once with 100 ml of ethanol and three times with 20 ml of t-butanol. Then the resulting mass is lyophilized and coated with osmium to obtain a sample. An electron microscopic SEM image of this sample is observed at a magnification of 3000 to 30000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber diameter.

The microfiber cellulose may be obtained by defibrating (making finer) a cellulose raw material (referred to also as raw material pulp hereinbelow). As the raw material pulp, one or more members may be selected and used from the group consisting of, for example, wood pulp made from hardwood, softwood, or the like; non-wood pulp made from straw, bagasse, cotton, hemp, bast fibers, or the like; and de-inked pulp (DIP) made from recovered used paper, waste paper, or the like. These various raw materials may be in the form of a ground product (powdered product), such as those referred to as cellulose-based powder.

In this regard, however, the raw material pulp is preferably wood pulp in order to avoid contamination of impurities as much as possible. As the wood pulp, one or more members may be selected and used from the group consisting of, for example, chemical pulp, such as hardwood kraft pulp (LKP) and softwood kraft pulp (NKP), and mechanical pulp (TMP).

The hardwood kraft pulp may be hardwood bleached kraft pulp, hardwood unbleached kraft pulp, or hardwood semi-bleached kraft pulp. Similarly, the softwood kraft pulp may be softwood bleached kraft pulp, softwood unbleached kraft pulp, or softwood semi-bleached kraft pulp.

As the mechanical pulp, one or more members may be selected and used from the group consisting of, for example, stone ground pulp (SGP), pressurized stone ground pulp (PGW), refiner ground pulp (RGP), chemi-ground pulp (CGP), thermo-ground pulp (TGP), ground pulp (GP), thermomechanical pulp (TMP), chemithermomechanical pulp (CTMP), refiner mechanical pulp (RMP), and bleached thermomechanical pulp (BTMP).

The raw material pulp may be pretreated by a chemical method prior to defibration. Such pretreatment by a chemical method may be, for example, hydrolysis of polysaccharides with acid (acid treatment), hydrolysis of polysaccharides with enzyme (enzyme treatment), swelling of polysaccharides with alkali (alkali treatment), oxidation of polysaccharides with an oxidizing agent (oxidation treatment), or reduction of polysaccharides with a reducing agent (reduction treatment). Among these, as a pretreatment by a chemical method, enzyme treatment is preferred, and more preferred is one or more treatments selected from acid treatment, alkali treatment, and oxidation treatment, in addition to the enzyme treatment. The enzyme treatment is discussed in detail below.

As an enzyme used in the enzyme treatment, preferably at least one of, more preferably both of cellulase enzymes and hemicellulase enzymes are used. With such enzymes, defibration of the cellulose raw material is more facilitated. It is noted that cellulase enzymes cause degradation of cellulose in the presence of water, whereas hemicellulase enzymes cause degradation of hemicellulose in the presence of water.

The cellulase enzymes may be enzymes produced by, for example, the genus Trichoderma (filamentous fungus), the genus Acremonium (filamentous fungus), the genus Aspergillus (filamentous fungus), the genus Phanerochaete (basidiomycete), the genus Trametes (basidiomycete), the genus Humicola (filamentous fungus), the genus Bacillus (bacteria), the genus Schizophyllum (bacteria), the genus Streptomyces (bacteria), and the genus Pseudomonas (bacteria). These cellulase enzymes are available as reagents or commercial products. Examples of the commercial products may include, for example, Cellulosin T2 (manufactured by HBI ENZYMES INC.), Meicelase (manufactured by MEIJI SEIKA PHARMA CO., LTD.), Novozyme 188 (manufactured by NOVOZYMES), Multifect CX10L (manufactured by GENENCOR), and cellulase enzyme GC220 (manufactured by GENENCOR).

The cellulase enzymes may also be either EG (endoglucanase) or CBH (cellobiohydrolase). EG and CBH may be used alone or in mixture, or further in mixture with hemicellulase enzymes.

The hemicellulase enzymes may be, for example, xylanase, which degrades xylan; mannase, which degrades mannan; or arabanase, which degrades araban. Pectinase, which degrades pectin, may also be used.

Hemicellulose is a polysaccharide other than pectin, which is present among cellulose microfibrils of plant cell walls. Hemicellulose has numeral varieties and varies depending on the kinds of wood and among cell wall layers. Glucomannan is a major component in the secondary walls of softwood, whereas 4-O-methylglucuronoxylan is a major component in the secondary walls of hardwood. Thus, use of mannase is preferred for obtaining fine fibers from softwood bleached kraft pulp (NBKP), whereas use of xylanase is preferred for obtaining fine fibers from hardwood bleached kraft pulp (LBKP).

The amount of the enzyme to be added with respect to the amount of the cellulose raw material may depend on, for example, the kind of enzyme, the kind of wood (either softwood or hardwood) used as a raw material, or the kind of mechanical pulp. The amount of the enzyme to be added may preferably be 0.1 to 3 mass%, more preferably 0.3 to 2.5 mass%, particularly preferably 0.5 to 2 mass%, of the amount of the cellulose raw material. With the amount of the enzyme below 0.1 mass%, sufficient effect due to the addition of the enzyme may not be obtained. With the amount of the enzyme over 3 mass%, cellulose may be saccharified to lower the yield of the fine fibers. A problem also resides in

that improvement in effect worth the increased amount to be added may not be observed.

When a cellulase enzyme is used as the enzyme, the enzyme treatment is preferably carried out at a pH in a weakly acidic region (pH = 3.0 to 6.9) in view of the enzymatic reactivity. On the other hand, when a hemicellulase enzyme is used as the enzyme, the enzyme treatment is preferably carried out at a pH in a weakly alkaline region (pH = 7.1 to 10.0).

Irrespective of whether a cellulase enzyme or a hemicellulase enzyme is used, the enzyme treatment is carried out at a temperature of preferably 30 to 70 °C, more preferably 35 to 65 °C, particularly preferably 40 to 60 °C. At a temperature of 30 °C or higher, the enzymatic activity is hard to be lowered, and prolongation of the treatment time may be avoided. At a temperature of 70 °C or lower, enzyme inactivation may be avoided.

The duration of the enzyme treatment may depend on, for example, the type of the enzyme, the temperature in the enzyme treatment, and the pH in the enzyme treatment. Generally, the duration of the enzyme treatment is 0.5 to 24 hours.

After the enzyme treatment, the enzyme is preferably inactivated. Inactivation of enzymes may be effected by, for example, addition of an alkaline aqueous solution (preferably at pH 10 or higher, more preferably at pH 11 or higher) or addition of 80 to 100 °C hot water.

Next, the alkali treatment is discussed.

Alkali treatment prior to the defibration causes partial dissociation of hydroxyl groups in hemicellulose or cellulose in pulp, resulting in anionization of the molecules, which weakens intra- and intermolecular hydrogen bonds to promote dispersion of the cellulose raw material during the defibration.

As the alkali used in the alkali treatment, for example, sodium hydroxide, lithium hydroxide, potassium hydroxide, an aqueous ammonia solution, or organic alkali, such as tetramethylammonium hydroxide, tetraethylammonium hydroxide, tetrabutylammonium hydroxide, and benzyltrimethylammonium hydroxide may be used. In view of the manufacturing cost, sodium hydroxide is preferably used.

The enzyme treatment, acid treatment, or oxidation treatment prior to the defibration may result in a low water retention, a high degree of crystallinity, and also high homogeneity of the microfiber cellulose. In this regard, microfiber cellulose at a low water retention is easily dewatered, so that dewaterability of a cellulose fiber slurry may be improved.

The enzyme treatment, acid treatment, or oxidation treatment of the raw material pulp causes decomposition of the amorphous region of hemicellulose and cellulose in pulp, which leads to reduction of energy required for the defibration and to improvement in uniformity and dispersibility of the cellulose fibers. The pretreatment, however, lowers the aspect ratio of microfiber cellulose, and it is thus preferred to avoid excessive pretreatment for the purpose of using the microfiber cellulose as a reinforcing material for resins.

The defibration of the raw material pulp may be performed by beating the raw material pulp in, for example, beaters, homogenizers, such as high-pressure homogenizers and high-pressure homogenizing apparatus, millstone friction machines, such as grinders and mills, single-screw kneaders, multi-screw kneaders, kneaders, refiners, and jet mills. It is preferred to use refiners or jet mills.

The average fiber length (average of lengths of single fibers) of the microfiber cellulose obtained by defibration of raw material pulp is preferably 0.10 to 2.00 mm, more preferably 0.12 to 1.50 mm, particularly preferably 0.15 to 1.00 mm. With an average fiber length below 0.10 mm, the microfiber cellulose may not be able to form three dimensional networks among them, resulting in low flexural modulus of the resulting composite rein, and thus poor reinforcing effect on resins. With an average fiber length over 2.00 mm, the length of the microfiber cellulose differs nothing from that of the raw material pulp, so that the reinforcing effect may not be sufficient.

The average fiber length of the cellulose raw material, which is a raw material of microfiber cellulose, is preferably 0.50 to 5.00 mm, more preferably 1.00 to 3.00 mm, particularly preferably 1.50 to 2.50 mm. With an average fiber length of the cellulose raw material below 0.50 mm, reinforcing effect on resins after defibration may not be sufficient. With an average fiber length over 5.00 mm, manufacturing cost in defibration may be disadvantageous.

Further, the defibration of the raw material pulp is effected so that the average fiber length ratio is preferably less than 30, more preferably 1.5 to 20, particularly preferably 2.0 to 10. At an average fiber length ratio of 30 or higher, mechanical shear on the fibers is excessive, resulting in too much damage of the fibers. This may cause the fibers being too short, or the strength of the fibers per se being deteriorated, so that the reinforcing effect on resins may not be developed upon compounding the fibers with a resin.

As used herein, the average fiber length ratio refers to a value obtained by dividing the average fiber length of cellulose fibers before defibration by the average fiber length of cellulose fibers after defibration (average fiber length before defibration / average fiber length after defibration).

The average fiber length of the cellulose fibers may arbitrarily be adjusted by, for example, selection, pretreatment, or defibration of the raw material pulp.

As used herein, the average fiber length of the cellulose fibers is a value determined using a fiber analyzer FS5 manufactured by Valmet K.K. The same is applicable to the fine fiber percentage as will be discussed below.

The fine fiber percentage of the microfiber cellulose is preferably 30% or higher, more preferably 35 to 99%,

particularly preferably 40 to 95%. At a fine fiber percentage of 30% or higher, homogeneous fibers are present at a higher percentage, which hardly causes progress of deterioration of the composite resin. However, at a fine fiber percentage over 99%, the flexural modulus may be insufficient.

The fine fiber percentage of the microfiber cellulose has been discussed above, and it is still more preferred to adjust the fine fiber percentage of also a cellulose raw material, which is a raw material of microfiber cellulose, to fall within the predetermined range. Specifically, the fine fiber percentage of the cellulose raw material, which is a raw material of microfiber cellulose, is preferably 1% or higher, more preferably 3 to 20%, particularly preferably 5 to 18%. With the fine fiber percentage of the cellulose raw material before defibration falling within the above range, the fibers undergo less damage even when the cellulose raw material is defibrated into microfiber cellulose with a fine fiber percentage of 30% or higher, resulting in improved reinforcing effect on resins.

The fine fiber percentage may be adjusted through pretreatment, such as enzyme treatment. However, the enzyme treatment, in particular, may cause tattering of the fibers per se to impair the reinforcing effect on resins. In view of this, the amount of the enzyme to be added is preferably 2 mass% or less, more preferably 1 mass% or less, particularly preferably 0.5 mass% or less. Eliminating the enzyme treatment (the amount to be added is 0 mass%) may be an alternative.

As used herein, the fine fiber percentage refers to the percentage in terms of mass of the pulp fibers having a fiber length of 0.2 mm or shorter.

The aspect ratio of the microfiber cellulose is preferably 2 to 15000, more preferably 10 to 10000. With an aspect ratio below 2, the microfiber cellulose may not be able to form three dimensional networks among them, resulting in poor reinforcing effect even with an average fiber length of 0.10 mm or longer. With an aspect ratio over 15000, the microfiber cellulose tends to be highly entangled, which may lead to insufficient dispersion in the resin.

As used herein, the aspect ratio is a value obtained by dividing the average fiber length by the average fiber width. A larger aspect ratio causes a larger number of locations to be caught, which enhances the reinforcing effect but, as such, is assumed to result in lower ductility of the resin.

The percentage of fibrillation of the microfiber cellulose is preferably 1.0 to 30.0%, more preferably 1.5 to 20.0%, particularly preferably 2.0 to 15.0%. With a percentage of fibrillation over 30.0%, the area of contact with water is too large, which may make the dewatering difficult even when the defibration results in the average fiber width within a range of 0.1 μm or larger. With a percentage of fibrillation below 1.0 %, the hydrogen bonding between the fibrils may be too little to form firm three dimensional networks.

As used herein, the percentage of fibrillation refers to the value determined by disintegrating cellulose fibers in accordance with JIS-P-8220: 2012 "Pulp-Laboratory wet disintegration", and measuring the disintegrated pulp with FiberLab manufactured by KAJAANI.

The degree of crystallinity of the microfiber cellulose is preferably 50% or higher, more preferably 55% or higher, particularly preferably 60% or higher. With a degree of crystallinity below 50%, the mixability with pulp or cellulose nanofibers may be improved, whereas the strength of the fibers per se may be lowered to make it difficult to improve the strength of resins. Further, with a degree of crystallinity below 50%, heat resistance may not be sufficient, particularly in the present embodiment wherein the rate of substitution with carbamate groups is 1.0 mmol/g or higher. This is assumed to be because, with a lower degree of crystallinity, external heat immediately causes thermal decomposition to proceed, whereas with a higher degree of crystallinity, external heat is spent first to loosen the crystals, and then thermal decomposition is initiated. On the other hand, the degree of crystallinity of the microfiber cellulose is preferably 95% or lower, more preferably 90% or lower, particularly preferably 85% or lower. With a degree of crystallinity over 95%, the ratio of firm hydrogen bonding within the molecules is high, which makes the fibers themselves rigid and impairs dispersibility.

The degree of crystallinity of the microfiber cellulose may arbitrarily be adjusted by, for example, selection, pretreatment, or making finer of the raw material pulp.

As used herein, the degree of crystallinity refers to a value determined in accordance with JIS K 0131 (1996).

The pulp viscosity of the microfiber cellulose is preferably 2 cps or higher, more preferably 4 cps or higher. With a pulp viscosity of the microfiber cellulose below 2 cps, control of aggregation of the microfiber cellulose may be difficult.

As used herein, the pulp viscosity refers to a value determined in accordance with TAPPI T 230.

The freeness of the microfiber cellulose is preferably 500 ml or less, more preferably 300 ml or less, particularly preferably 100 ml or less. With a freeness of the microfiber cellulose over 500 ml, sufficient effect to improve resin strength may not be obtained.

As used herein, the freeness refers to a value determined in accordance with JIS P8121-2 (2012).

The zeta potential of the microfiber cellulose is preferably -150 to 20 mV, more preferably -100 to 0 mV, particularly preferably -80 to -10 mV. With a zeta potential below -150 mV, compatibility with resins may significantly be deteriorated, resulting in insufficient reinforcing effect. With a zeta potential over 20 mV, dispersion stability may be impaired.

The water retention of the microfiber cellulose is preferably 80 to 400%, more preferably 90 to 350%, particularly preferably 100 to 300%. With a water retention below 80%, the microfiber cellulose differs nothing from the raw material pulp, so that the reinforcing effect may be insufficient. With a water retention over 400%, dewaterability tends to be poor, and the microfiber cellulose tends to aggregate. Note that the water retention of the microfiber cellulose may be made still lower by the substitution of its hydroxy groups with carbamate groups, which improves dewaterability and drying property.

The water retention of the microfiber cellulose may arbitrarily be adjusted by, for example, selection, pretreatment, or defibration of the raw material pulp.

As used herein, the water retention refers to a value determined in accordance with JAPAN TAPPI No. 26 (2000).

The microfiber cellulose has carbamate groups. It is not particularly limited how the microfiber cellulose has been caused to have carbamate groups. For example, the microfiber cellulose may have been caused to have carbamate groups through carbamation of a cellulose raw material, or through carbamation of microfiber cellulose (cellulose raw material that has been made finer).

Note that having carbamate groups means that fibrous cellulose has carbamate groups introduced therein (esters of carbamic acid). Carbamate groups are represented by the formula -O-CO-NH-, and may be, for example, -O-CO-$NH_2$, -O-CONHR, or -O-CO-$NR_2$. That is, carbamate groups may be represented by the following structural formula (1).

[Formula 1]

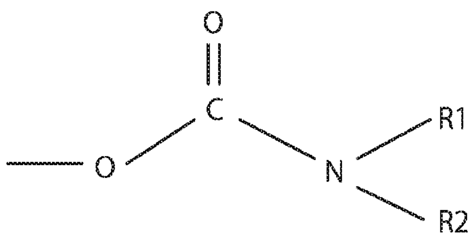

In the formula, R is independently at least any of a saturated straight chain hydrocarbon group, a saturated branched hydrocarbon group, a saturated cyclic hydrocarbon group, an unsaturated straight chain hydrocarbon group, an unsaturated branched hydrocarbon group, an aromatic group, and derivative groups thereof.

The saturated straight chain hydrocarbon group may be, for example, a straight chain alkyl group having 1 to 10 carbon atoms, such as a methyl group, an ethyl group, or a propyl group.

The saturated branched hydrocarbon group may be, for example, a branched alkyl group having 3 to 10 carbon atoms, such as an isopropyl group, a sec-butyl group, an isobutyl group, or a tert-butyl group.

The saturated cyclic hydrocarbon group may be, for example, a cycloalkyl group, such as a cyclopentyl group, a cyclohexyl group, or a norbornyl group.

The unsaturated straight chain hydrocarbon group may be, for example, a straight chain alkenyl group having 2 to 10 carbon atoms, such as an ethenyl group, a propene-1-yl group, or a propene-3-yl group, or a straight chain alkynyl group having 2 to 10 carbon atoms, such as an ethynyl group, a propyn-1-yl group, or a propyn-3-yl group.

The unsaturated branched hydrocarbon group may be, for example, a branched alkenyl group having 3 to 10 carbon atoms, such as a propene-2-yl group, a butene-2-yl group, or a butene-3-yl group, or a branched alkynyl group having 4 to 10 carbon atoms, such as a butyne-3-yl group.

The aromatic group may be, for example, a phenyl group, a tolyl group, a xylyl group, or a naphthyl group.

The derivative groups may be a saturated straight chain hydrocarbon group, a saturated branched hydrocarbon group, a saturated cyclic hydrocarbon group, an unsaturated straight chain hydrocarbon group, an unsaturated branched hydrocarbon group, or an aromatic group, having one or a plurality of hydrogen atoms thereof substituted with a substituent (for example, a hydroxy group, a carboxy group, or a halogen atom).

In the microfiber cellulose having carbamate groups (having carbamate groups introduced), part or all of the highly polar hydroxy groups have been substituted with relatively less polar carbamate groups. Thus, such microfiber cellulose with carbamate groups has lower hydrophilicity and higher affinity to resins having lower polarity. As a result, the microfiber cellulose with carbamate groups has excellent homogeneous dispersibility in the resin. Further, a slurry of the microfiber cellulose with carbamate groups has a lower viscosity and good handling property.

The substitution rate of the hydroxy groups of the microfiber cellulose with carbamate groups is preferably 1.0 to 2.0 mmol/g, more preferably 1.1 to 1.9 mmol/g, particularly preferably 1.2 to 1.8 mmol/g. With a substitution rate of 1.0 mmol/g or higher, effect from introduction of carbamate groups, particularly effect to improve the flexural modulus of resins, is securely achieved. This is assumed to be because, with a substitution rate of 1.0 mmol/g or higher, hydrogen

bonding between cellulose molecules caused by the hydroxyl groups of cellulose is weakened (aggregation alleviation effect) and, due to the introduction of the carbamate groups, which have higher hydrophobicity compared to the hydroxyl groups, affinity to resins is improved (affinity improving effect), and as a result, the microfiber cellulose molecules are not aggregated in the resin to securely play a part in reinforcing the resin. On the other hand, a substitution rate over 2.0 mmol/g results in lower heat resistance of the resulting composite resin. In this regard, application of heat to cellulose fibers usually causes elimination of the hydroxyl groups or the like, and the molecular chain may be shortened from the site of the elimination or the like. Here, modification of part of the hydroxyl groups through carbamation or the like further facilitates elimination of the hydroxyl groups. Thus, it is assumed that too high a rate of carbamation may cause too short the molecular chain, too low the decomposition temperature, and too low the heat resistance. With a rate of substitution with carbamate groups over 2.0 mmol/g, the carbamation of the raw material pulp results in shorter average fiber length of the pulp, and the resulting microfiber cellulose is prone to have an average fiber length of less than 0.1 mm, which may cause insufficient development of the reinforcing effect on resins. It should be understood that at a substitution rate over 5.0 mmol/g, the cellulose fibers cannot maintain their fiber shapes.

As used herein, the rate of substitution (mmol/g) with carbamate groups refers to the of the carbamate groups by mole contained in 1 g of a cellulose raw material having carbamate groups. The rate of substitution with carbamate groups is obtained by determining the amount of the N atoms present in carbamated pulp by Kjeldahl method, and calculating the rate of carbamation per unit weight. Note that cellulose is a polymer having anhydroglucose as a structural unit, wherein one structural unit includes three hydroxy groups.

With the cellulose fiber according to the present embodiment, the 5% weight-loss temperature in heating (from 105 °C to 350 °C at a rate of 5 °C per minute) in absolutely dry state is preferably 240 °C or higher, more preferably 245 °C or higher, particularly preferably 250 °C or higher. With a 5% weight-loss temperature of 240 °C or higher, composite resin with excellent heat resistance may be obtained.

Further, with the cellulose fiber according to the present embodiment, the 10% weight-loss temperature in heating (from 105 °C to 350 °C at a rate of 5 °C per minute) in absolutely dry state is preferably 260 °C or higher, more preferably 265 °C or higher, particularly preferably 270 °C or higher. With a 10% weight-loss temperature of 260 °C or higher, the fibers may undergo limited damage in various processing, like compounding with a resin, even under heating at various temperatures or for a plurality of times, so that it is not necessary to impose excessive limit on the working temperature for resins and processing conditions may be eased.

In the discussion above, the heating conditions are such that the temperature of the cellulose fibers in absolutely dry state is raised from 105 °C up to 350 °C at a rate of 5 °C per minute.

<Carbamation>

The introduction of carbamate groups (carbamation) into microfiber cellulose (or cellulose raw material when the carbamation is effected before defibration, as the case may be, and also referred to simply as cellulose fibers hereinbelow) may be performed by carbamation of the cellulose raw material followed by making the resulting product finer, or by making the cellulose raw material finer followed by carbamation. In the present specification, discussion of the defibration of cellulose raw material precedes discussion of the carbamation (modification), but either the defibration or the carbamation may precede. However, it is preferred to perform the carbamation first, followed by the defibration. This is because dewaterability of the cellulose raw material before the defibration is highly effective, and the defibration of the cellulose raw material may be facilitated by the heating associated with the carbamation.

The process of carbamating the cellulose fibers may generally be divided into, for example, a mixing step, a removing step, and a heating step. Here, the mixing step and the removing step may together be referred to as a preparation step wherein a mixture to be subjected to the heating step is prepared. The carbamation is advantageous in effecting chemical modification without organic solvents.

In the mixing step, the cellulose fibers and urea or derivatives thereof (sometimes referred to simply as "urea or the like" hereinbelow) are mixed in a dispersion medium.

The urea or the derivatives thereof may be, for example, urea, thiourea, biuret, phenylurea, benzylurea, dimethylurea, diethylurea, tetramethylurea, or compounds obtained by substituting the hydrogen atoms of urea with alkyl groups. One or a combination of a plurality of these urea or derivatives thereof may be used, and use of urea is preferred.

The lower limit of the mixing ratio by mass of the urea or the like to the cellulose fibers (urea or the like / cellulose fibers) is preferably 10/100, more preferably 20/100. The upper limit thereof is preferably 300/100, more preferably 200/100. With a mixing ratio by mass of 10/100 or higher, the carbamation efficiency is improved. With a mixing ratio by mass over 300/100, the carbamation plateaus.

The dispersion medium is usually water, but other dispersion media, such as alcohol or ether, or a mixture of water and other dispersion media may be used.

In the mixing step, for example, the cellulose fibers and the urea or the like may be added to water, the cellulose fibers may be added to an aqueous solution of the urea or the like, or the urea or the like may be added to a slurry

containing the cellulose fibers. The addition may be followed by stirring for homogeneous mixing. Further, the dispersion liquid containing the cellulose fibers and the urea or the like may optionally contain other components.

In the removing step, the dispersion medium is removed from the dispersion liquid containing the cellulose fibers and the urea or the like obtained from the mixing step. By removing the dispersion medium, the urea or the like may efficiently be reacted in the subsequent heating step.

The removal of the dispersion medium is preferably carried out by volatilizing the dispersion medium under heating. By this means, only the dispersion medium may efficiently be removed, leaving the components including the urea or the like.

The lower limit of the heating temperature in the removing step is, when the dispersion medium is water, preferably 50 °C, more preferably 70 °C, particularly preferably 90 °C. At a heating temperature of 50 °C or higher, the dispersion medium may efficiently be volatilized (removed). On the other hand, the upper limit of the heating temperature is preferably 120 °C, more preferably 100 °C. At a heating temperature over 120 °C, the dispersion medium and urea may react, disadvantageously resulting in self-decomposition of urea.

In the removing step, duration of the heating may suitably be adjusted depending on the solid concentration of the dispersion liquid, or the like, and may specifically be, for example, 6 to 24 hours.

After the removing step and prior to the heating step (reaction step), a drying step is preferably performed. In particular, it preferred that, in this drying step, the cellulose fibers to be subjected to the heating step is preferably dried until its moisture percentage is 10% or lower, preferably 0 to 9%, more preferably 0 to 8%. By drying the cellulose fibers prior to the heating step until its moisture percentage becomes 10% or lower, the carbamation rate may easily be adjusted to 1 mmol/g or higher.

In the heating step (reaction step), the mixture of the cellulose fibers and the urea or the like is heat treated. In this heating step, part or all of the hydroxy groups of the cellulose fibers are reacted with the urea or the like and substituted with carbamate groups. More specifically, the urea or the like, when heated, is decomposed into isocyanic acid and ammonia as shown by the reaction formula (1) below, and the isocyanic acid, which is highly reactive, reacts with the hydroxyl groups of cellulose to form carbamate groups as shown by the reaction formula (2) below.

$$NH_2\text{-}CO\text{-}NH_2 \text{ -> } H\text{-}N{=}C{=}O + NH_3 \ldots \quad (1)$$

$$Cell\text{-}OH + H\text{-}N{=}C{=}O \text{ -> } Cell\text{-}O\text{-}CO\text{-}NH_2 \ldots \quad (2)$$

The lower limit of the heating temperature in the heating step is preferably 120 °C, more preferably 130°C, particularly preferably the melting point of urea (about 134 °C) or higher, still more preferably 140 °C, most preferably 150 °C. At a heating temperature of 120 °C or higher, carbamation proceeds efficiently. The upper limit of the heating temperature is preferably 200 °C, more preferably 180 °C, particularly preferably 170 °C. At a heating temperature over 200 °C, the cellulose fibers may decompose, which may lead to insufficient reinforcing effect.

The lower limit of duration of the heating in the heating step is preferably 1 minute, more preferably 5 minutes, particularly preferably 30 minutes, still more preferably 1 hour, most preferably 2 hours. With the heating for 1 minute or longer, the carbamation reaction may be ensured. On the other hand, the upper limit of duration of the heating is preferably 15 hours, more preferably 10 hours. The heating for over 15 hours is not economical, and sufficient carbamation may be effected in 15 hours.

Yet, prolonged heating may deteriorate cellulose fibers. In this light, pH conditions in the heating step are important. The pH is preferably pH 9 or higher, more preferably pH 9 to 13, particularly preferably pH 10 to 12, which are under the alkaline conditions. The second best is at pH 7 or lower, preferably pH 3 to 7, particularly preferably pH 4 to 7, which are under the acidic or neutral conditions. Under the neutral conditions at pH 7 to 8, the average fiber length of the cellulose fibers may be short, resulting in inferior reinforcing effect on resins. On the other hand, under the alkaline conditions at pH 9 or higher, reactivity of the cellulose fibers may be enhanced, which promotes reaction with the urea or the like, resulting in efficient carbamation to ensure sufficient average fiber length of the cellulose fibers. Under the acidic conditions at pH 7 or lower, decomposition reaction of urea or the like into isocyanic acid and ammonia proceeds, which promotes reaction with the cellulose fibers, resulting in efficient carbamation to ensure sufficient average fiber length of the cellulose fibers. It is, however, preferred to perform the heating step under the alkaline conditions, where possible, as acid hydrolysis of cellulose may adversely proceed under the acidic conditions.

The pH may be adjusted by adding to the mixture an acidic compound (for example, acetic acid or citric acid) or an alkaline compound (for example, sodium hydroxide or calcium hydroxide).

For the heating in the heating step, for example, a hot air dryer, a paper machine, or a dry pulp machine may be used.

The mixture obtained from the heating step may be washed. The washing may be carried out with water or the like. By this washing, unreacted residual urea or the like may be removed.

<Slurry>

The microfiber cellulose is dispersed in an aqueous medium to prepare a dispersion (slurry), as needed. The aqueous medium is particularly preferably water in its entirety, but aqueous medium partly containing another liquid compatible with water may also be used. Such another liquid may be, for example, a lower alcohol having 3 or less carbon atoms.

The solid concentration of the slurry is preferably 0.1 to 10.0 mass%, more preferably 0.5 to 5.0 mass%. With a solid concentration below 0.1 mass%, an excessive amount of energy may be required for dewatering and drying. With a solid concentration over 10.0 mass%, fluidity of the slurry per se may be too low to homogeneously admix with the dispersant, when used.

<Acid-modified Resin>

The microfiber cellulose is preferably mixed with an acid-modified resin. The admixing of the acid-modified resin causes its acid radicals to be ionically bonded to part or all of the carbamate groups. By this ionic bonding, the reinforcing effect on resins is improved.

The acid-modified resin may be, for example, acid-modified polyolefin resins, acid-modified epoxy resins, or acid-modified styrene elastomer resins. It is preferred to use acid-modified polyolefin resins. An acid-modified polyolefin resin is a copolymer of an unsaturated carboxylic acid component and a polyolefin component.

As the polyolefin component, one or more polymers of alkenes may be selected and used from the group consisting of, for example, ethylene, propylene, butadiene, and isoprene. Preferably, use of a polypropylene resin, which is a polymer of propylene, is preferred.

As the unsaturated carboxylic acid component, one or more members may be selected and used from the group consisting of, for example, maleic anhydrides, phthalic anhydrides, itaconic anhydrides, citraconic anhydrides, and citric anhydrides. Preferably, use of maleic anhydrides is preferred. In other words, use of maleic anhydride-modified polypropylene resins is preferred.

The amount of the acid-modified resin to be added is preferably 0.1 to 1000 parts by mass, more preferably 1 to 500 parts by mass, particularly preferably 10 to 200 parts by mass, based on 100 parts by mass of the microfiber cellulose. In particular, when the acid-modified resin is a maleic anhydride-modified polypropylene resin, the amount to be added is preferably 1 to 200 parts by mass, more preferably 10 to 100 parts by mass. With an amount of the acid-modified resin to be added below 0.1 parts by mass, improvement in strength is not sufficient. An amount to be added over 1000 parts by mass is excessive and tends to lower the strength.

The weight average molecular weight of the maleic anhydride-modified polypropylene is, for example, 1000 to 100000, preferably 3000 to 50000.

The acid value of the maleic anhydride-modified polypropylene is preferably 0.5 mgKOH/g or more and 100 mgKOH/g or less, more preferably 1 mgKOH/g or more and 50 mgKOH/g or less.

Further, the melt flow rate (MFR) of the acid-modified resin is preferably 2000 g per 10 minutes or lower (190 °C, 2.16 kg), more preferably 1500 g per 10 minutes or lower, particularly preferably 500 g per 10 minutes or lower. With the MFR over 2000 g per 10 minutes, the acid-modified resin may disturb the dispersibility of the cellulose fibers.

Note that the acid value is determined by titration with potassium hydroxide in accordance with JIS-K2501. The MFR is determined by the weight of the sample flew out in 10 minutes at 190 °C under a 2.16 kg load in accordance with JIS-K7210.

<Dispersant>

The microfiber cellulose according to the present embodiment is preferably mixed with a dispersant. As the dispersant, aromatic compounds having an amine group and/or a hydroxyl group or aliphatic compounds having an amine group and/or a hydroxyl group are preferred.

Examples of the aromatic compounds having an amine group and/or a hydroxyl group may include anilines, toluidines, trimethylanilines, anisidines, tyramines, histamines, tryptamines, phenols, dibutylhydroxytoluenes, bisphenol A's, cresols, eugenols, gallic acids, guaiacols, picric acids, phenolphthaleins, serotonins, dopamines, adrenalines, noradrenalines, thymols, tyrosines, salicylic acids, methyl salicylates, anisyl alcohols, salicyl alcohols, sinapyl alcohols, difenidols, diphenylmethanols, cinnamyl alcohols, scopolamines, triptophols, vanillyl alcohols, 3-phenyl-1-propanols, phenethyl alcohols, phenoxyethanols, veratryl alcohols, benzyl alcohols, benzoins, mandelic acids, mandelonitriles, benzoic acids, phthalic acids, isophthalic acids, terephthalic acids, mellitic acids, and cinnamic acids.

Examples of the aliphatic compounds having an amine group and/or a hydroxyl group may include capryl alcohols, 2-ethylhexanols, pelargonic alcohols, capric alcohols, undecyl alcohols, lauryl alcohols, tridecyl alcohols, myristyl alcohols, pentadecyl alcohols, cetanols, stearyl alcohols, elaidyl alcohols, oleyl alcohols, linoleyl alcohols, methylamines, dimethylamines, trimethylamines, ethylamines, diethylamines, ethylenediamines, triethanolamines, N,N-diisopropylethylamines, tetramethylethylenediamines, hexamethylenediamines, spermidines, spermines, amantadines, formic acids, acetic acids, propionic acids, butyric acids, valeric acids, caproic acids, enanthic acids, caprylic acids, pelargonic acids, capric acids, lauric acids, myristic acids, palmitic acids, margaric acids, stearic acids, oleic acids, linolic acids, linoleic acids, arachidonic acids, eicosapentaenoic acids, docosahexaenoic acids, and sorbic acids.

The dispersants mentioned above block hydrogen bonding between the molecules of the cellulose fibers. Consequently, the microfiber cellulose, in kneading with a resin, is reliably dispersed in the resin. Further, the dispersants mentioned above also have a role to improve the compatibility of the microfiber cellulose and a resin. In this regard, the dispersibility of the microfiber cellulose in the resin is improved.

It is conceivable, in kneading the fibrous cellulose and a resin, to add a separate compatibilizer (agent), but mixing the microfiber cellulose and the dispersant (agent) in advance to prepare a fibrous cellulose-containing material, rather than adding the agent at this stage, results in more uniform clinging of the agent over the microfiber cellulose, to thereby enhance the effect to improve compatibility with the resin.

In addition, as the melting point of polypropylene, for example, is 160 °C, the fibrous cellulose (microfiber cellulose) and the resin are kneaded at about 180 °C. In this state, the dispersant (liquid), if added, will be dried instantaneously. In this regard, there is known to prepare a masterbatch (a composite resin containing a high concentration of microfiber cellulose) using a resin with a lower melting point, and then lower the concentration of the microfiber cellulose using a resin with an ordinary melting point. However, since resins with a lower melting point are generally lower in strength, the strength of the composite resin may be lower according to this method.

The amount of the dispersant to be mixed is preferably 0.1 to 1000 parts by mass, more preferably 1 to 500 parts by mass, particularly preferably 10 to 200 parts by mass, based on 100 parts by mass of the microfiber cellulose. With an amount of the dispersant to be added below 0.1 parts by mass, improvement in resin strength may not be sufficient. An amount of the dispersant to be added over 1000 parts by mass is excessive and tends to lower the resin strength.

It is assumed that the acid-modified resin discussed above is intended to improve the reinforcing effect through improvement of compatibility by its acid radicals ionically bonded with the carbamate groups of the microfiber cellulose, and has a large molecular weight and thus blends well with the resin, contributing to the improvement in strength. On the other hand, the dispersant mentioned above is intended to improve dispersibility in the resin through blocking of the aggregation by being interposed between the hydroxyl groups of the microfiber cellulose, and has a lower molecular weight than that of the acid-modified resin, and thus is capable of entering the narrow space among the fibers of the microfiber cellulose, where the acid-modified resin cannot enter, to play a part in enhancing the dispersibility and thus the strength. In view of the above, it is preferred that the molecular weight of the acid-modified resin is 2 to 2000 times, preferably 5 to 1000 times the molecular weight of the dispersant.

<Non-interactive Powder>

It is preferred that the microfiber cellulose according to the present embodiment is mixed with powder that is non-interactive with the microfiber cellulose. The microfiber cellulose, by mixing with the non-interactive powder, may be brought into a form for developing the reinforcibility on resins. In this regard, according to this embodiment, before compounding the microfiber cellulose with a resin, the aqueous medium is removed to control the moisture percentage to fall within the prescribed range. However, during removal of the aqueous medium, the cellulose may irreversibly aggregate by means of hydrogen bonding between the cellulose molecules, which may prevent the reinforcing effect of the fibers from being fully exerted. In view of this, with the powder that is non-interactive with the microfiber cellulose in the presence of the microfiber cellulose, the hydrogen bonding between the cellulose molecules is physically blocked.

As used herein, "non-interactive" means not forming a firm bonding with cellulose by means of covalent bonding, ionic bonding, or metallic bonding (i.e., hydrogen bonding and bonding with van der Waals force fall under the concept of non-interactiveness). Preferably, the firm bonding is bonding with a binding energy over 100 kJ/mol.

The non-interactive powder is preferably at least either of inorganic powder and resin powder, which have little effect of dissociating the hydroxyl groups of the cellulose fibers into hydroxide ions when in coexistence with the cellulose fibers in a slurry, more preferably the inorganic powder. With such a property, the non-interactive powder and the microfiber cellulose and the like, when mixed to prepare a fibrous cellulose-containing material, followed by compounding with a resin or the like, may easily be dispersed in the resin or the like. The non-interactive powder is operationally advantageously the inorganic powder, in particular. Specifically, the moisture percentage of the fibrous cellulose-containing material may be adjusted by, for example, drying through bringing the fibrous cellulose-containing material in aqueous dispersion (mixed liquid of fibrous cellulose and non-interactive powder) into direct contact with a metallic drum as a heat source (e.g., drying with a Yankee dryer, a cylinder dryer, or the like), or by warming without bringing the fibrous cellulose-containing material in aqueous dispersion into direct contact with a heat source, i.e., drying in the air (e.g., drying in a constant temperature dryer or the like). Here, the resin powder, when brought into contact with a warmed

metal plate (e.g., a Yankee dryer, a cylinder dryer, or the like) for drying, forms a film over the metal plate surface, which impairs thermal conductivity and significantly reduces drying efficiency. The inorganic powder is advantageous in that such a problem hardly occurs.

The average particle size of the non-interactive powder is preferably 1 to 10000 μm, more preferably 10 to 5000 μm, particularly preferably 100 to 1000 μm. With an average particle size over 10000 μm, the powder may not be able to enter the gaps among the cellulose fibers to block the aggregation during removal of the aqueous medium from the fibrous cellulose slurry. With an average particle size below 1 μm, the powder may be too fine to block hydrogen bonding between the microfiber cellulose molecules.

In particular, when the non-interactive powder is the resin powder, the resin powder, with its average particle size falling within the above-mentioned range, effectively exhibits the effect of entering the gaps among the cellulose fibers to block the aggregation. Moreover, the resin powder is excellent in kneadability with a resin, which eliminates the need for a large amount of energy and is thus economical. In addition, the resin powder melts during kneading with a resin, leaving no influence as grains on appearance, so that resin powder with even a large particle size may effectively be used. On the other hand, when the non-interactive powder is the inorganic powder, the inorganic powder, with its average particle size falling within the above-mentioned range, also exhibits the effect of entering the gaps among the cellulose fibers to block the aggregation. However, the inorganic powder, which is not changed significantly in size during kneading, of too large a particle size may possibly give influence as grains on appearance.

The resin powder is physically interposed among the fibers of the microfiber cellulose to block the hydrogen bonding, thereby improving dispersibility of the microfiber cellulose. On the other hand, the acid-modified resin discussed above has its acid radicals ionically bonded with the carbamate groups of the microfiber cellulose to improve compatibility, to thereby enhance the reinforcing effect. Here, the dispersant has the same function to block the hydrogen bonding between the molecules of the microfiber cellulose, while the resin powder, which is on the micrometer order, is physically interposed to interfere with the hydrogen bonding. Accordingly, though having a poorer dispersing property compared to that of the dispersant, the resin powder per se does not cause deterioration of the physical properties as it is molten to form a matrix. In contrast, the dispersant, which is on the molecular level and extremely small, covers the microfiber cellulose to block the hydrogen bonding, which results in higher efficacy in improving dispersibility of the microfiber cellulose. However, the dispersant may remain in the resin and cause deterioration of the physical properties.

As used herein, the average particle size of the non-interactive powder is the median diameter calculated from the volume-based particle size distribution determined of the powder as it is or in aqueous dispersion, using a particle size distribution measuring apparatus (e.g., laser diffraction/scattering-type particle size distribution measuring apparatus manufactured by HORIBA, LTD.).

The inorganic powder may be of a simple substance of a metal element belonging to Groups I to VIII of the Periodic Table, such as Fe, Na, K, Cu, Mg, Ca, Zn, Ba, Al, Ti, or silicon element, oxides thereof, hydroxides thereof, carbonates thereof, sulfates thereof, silicates thereof, sulfites thereof, or various clay minerals formed of these compounds. Specific examples may include, for example, barium sulfate, calcium sulfate, magnesium sulfate, sodium sulfate, calcium sulfite, zinc oxide, heavy calcium carbonate, light calcium carbonate, aluminum borate, alumina, iron oxide, calcium titanate, aluminum hydroxide, magnesium hydroxide, calcium hydroxide, sodium hydroxide, magnesium carbonate, calcium silicate, clay, wollastonite, glass beads, glass powder, silica gel, fumed silica, colloidal silica, silica sand, silica stone, quartz powder, diatomaceous earth, white carbon, and glass fiber. A plurality of these inorganic powders may be contained. The inorganic powder may be those contained in de-inked pulp, or so-called regenerated filler obtained by regenerating inorganic materials in paper sludge.

Preferably at least one inorganic powder selected from calcium carbonate, talc, white carbon, clay, sintered clay, titanium dioxide, and aluminum hydroxide, which are suitably used as paper fillers or pigments, and regenerated fillers, more preferably at least one inorganic powder selected from calcium carbonate, talc, and clay, particularly preferably either light calcium carbonate or heavy calcium carbonate, may be used. Calcium carbonate, talc, or clay, when used, facilitates compounding with a matrix of resin or the like. As these are general-purpose inorganic materials, no limit is imposed on their intended use, which is advantageous. Further, calcium carbonate is particularly preferred for the following reasons. With light calcium carbonate, size and shape of the powder may easily be made constant. This facilitates tailoring of the size and shape of the powder depending on the size and shape of cellulose fibers so as to facilitate entry of the powder into the gaps among cellulose fibers to block aggregation, thereby providing advantage of facilitating production of pinpoint effect. With heavy calcium carbonate, which has irregular shape, the powder, in the course of aggregation of the fibers during removal of the aqueous medium from the slurry, may advantageously enter the gaps among cellulose fibers to block aggregation even where various sizes of fibers are present in the slurry.

On the other hand, as the resin powder, resins used for obtaining the composite resin may similarly be used. It is indisputable that the former may be of different kind from, but preferably the same kind as the latter.

The amount of the non-interactive powder to be added may preferably be 1 to 9900 mass%, more preferably 5 to 1900 mass%, particularly preferably 10 to 900 mass% of the amount of the fibrous cellulose (microfiber cellulose). With an amount below 1 mass%, the powder may not provide sufficient effect to enter the gaps among the cellulose

fibers to block the aggregation. With an amount over 9900 mass%, the powder may disturb the fibrous cellulose to fulfill their functions as cellulose fibers. The non-interactive powder, where it is the inorganic powder, is preferably contained at a ratio that will not adversely affect thermal recycling.

The non-interactive powder may be a combination of the inorganic powder and the resin powder. With the combination of the inorganic powder and the resin powder, even when the inorganic powder and the resin powder are mixed under the conditions that the respective powders may aggregate separately, the two powders may mutually act to disturb the respective aggregations. Further, powder with a smaller particle size has a larger surface area, which causes tendency of being affected by the intermolecular force, rather than the gravity, resulting in easier aggregation. Accordingly, the powder, upon mixing with the microfiber cellulose slurry, may not be loosened well in the slurry, or may aggregate during removal of the aqueous medium, so that the powder may not sufficiently exhibit its effect to block the aggregation of the microfiber cellulose. It is assumed that, however, by combining the inorganic powder and the resin powder, the aggregation of the respective powders on its own is assumed to be alleviated.

In combining the inorganic powder and the resin powder, the ratio of the average particle size of the inorganic powder to the average particle size of the resin powder is preferably 1:0.1 to 1:10000, more preferably 1:1 to 1:1000. It is assumed that, with the ratio within this range, the problems arising from the intensity of each powder to aggregate on its own (the problems, for example, of difficulties upon mixing the powder and the microfiber cellulose slurry to loosen the powder in the slurry, or of aggregation of the powder during adjustment of the moisture percentage) will not occur, and the effect to block the aggregation of the microfiber cellulose may fully be exerted.

In combining the inorganic powder and the resin powder, the ratio of the amount in percent by mass of the inorganic powder to the amount in percent by mass of the resin powder is preferably 1:0.01 to 1:100, more preferably 1:0.1 to 1:10. It is assumed that, with the ratio within this range, the different kinds of powder may mutually disturb the respective aggregations. It is also assumed that, with the ratio within this range, the problems arising from the intensity of each powder to aggregate on its own (the problems, for example, of difficulties upon mixing the powder and the microfiber cellulose slurry to loosen the powder in the slurry, or of aggregation of the powder during adjustment of the moisture percentage) will not occur, and the effect to block the aggregation of the microfiber cellulose may fully be exerted.

<Method for Preparation>

The mixture of the fibrous cellulose (microfiber cellulose), the acid-modified resin, the dispersant, the non-interactive powder, and the like is processed into a fibrous cellulose-containing material having a moisture percentage of less than 18%, prior to kneading with the resin, as will be discussed later in detail. This fibrous cellulose-containing material is usually in the form of a dried product. Further, this dried product is preferably ground into a powdered product. In this form, the coloring of the fibrous cellulose composite resin obtained through kneading with a resin is reduced. Also, no drying of the fibrous cellulose is needed prior to kneading with the resin, which is thermally efficient. Further, when the non-interactive powder or the dispersant is already mixed in the mixture, the fibrous cellulose (microfiber cellulose) is less likely to be unredispersible even after the mixture is dried.

The mixture is dehydrated into a dehydrated product, as needed, prior to the drying. For the dehydration, one or more dehydrators may be selected and used from the group consisting of, for example, belt presses, screw presses, filter presses, twin rolls, twin wire formers, valveless filters, center disk filters, film treatment units, and centrifuges.

For drying the mixture or the dehydrated product, one or more means may be selected and used from the group consisting of, for example, rotary kiln drying, disk drying, air flow drying, medium fluidized drying, spray drying, drum drying, screw conveyor drying, paddle drying, single-screw kneading drying, multi-screw kneading drying, vacuum drying, and stirring drying.

The dried mixture (dried product) is pulverized into a powdered product. For pulverizing the dried product, one or more means may be selected and used from the group consisting of, for example, bead mills, kneaders, dispersers, twist mills, cut mills, and hammer mills.

The average particle size of the powdered product is preferably 1 to 10000 μm, more preferably 10 to 5000 μm, particularly preferably 100 to 1000 μm. With an average particle size over 10000 μm, the powdered product may have inferior kneadability with the resin. On the other hand, making the average particle size of the powdered product smaller than 1 μm. requires a high amount of energy, which is not economical.

The average particle size of the powdered product may be controlled by regulating the degree of pulverization, or by classification in classification apparatus, such as filters or cyclones.

The bulk specific gravity of the mixture (powdered product) is preferably 0.03 to 1.0, more preferably 0.04 to 0.9, particularly preferably 0.05 to 0.8. A bulk specific gravity exceeding 1.0 means the hydrogen bonding between the molecules of the fibrous cellulose being still firmer, so that dispersion in the resin is not easy. A bulk specific gravity of less than 0.03 is disadvantageous in view of transportation cost.

The bulk specific gravity is a value determined in accordance with JIS K7365.

The moisture percentage of the mixture (fibrous cellulose-containing material) is preferably less than 18%,

more preferably 0 to 17%, particularly preferably 0 to 16%. With a moisture percentage of 18% or higher, the coloring of the fibrous cellulose composite resin due to the components derived from cellulose fibers may not be reduced. In particular, where the rate of substitution with the carbamate groups is 1 mmol/g or higher, the coloring may not be reduced.

Note that at a moisture percentage of 18% or higher, it is assumed that the microfiber cellulose, when exposed to a high temperature of 180 °C or higher, for example, in melt kneading, is brought into contact with high-temperature water to undergo reaction to lower its molecular weight or the like, resulting in formation of low molecular weight compounds, which are the factors of the coloring, so that the coloring by the low molecular weight compounds proceeds in the kneading step. By making the moisture percentage less than 18%, the low molecular weight compounds may be evaporated before the microfiber cellulose is brought into contact with the high-temperature water, which avoids the coloring.

Incidentally, the substances responsible for the coloring inherently present in the microfiber cellulose (hemicellulose or the like), when caused to have lower molecular weights, are caused to be water soluble, and may thus be removed during washing of the carbamated pulp. In this regard, too, the rate of substitution with carbamate groups is preferably 1 mmol/g or higher. With a rate of substitution of less than 1 mmol/g, the substances responsible for the coloring remain in the microfiber cellulose, and the above-mentioned contact between the high-temperature water and the substances responsible for the coloring may result in significant coloring.

The moisture percentage is a value determined by holding a sample at 105 °C for 6 hours or longer in a constant temperature dryer until fluctuation in mass is not observed and measuring the mass as a mass after drying, and calculated by the following formula:

$$\text{Moisture percentage (\%)} = [(\text{mass before drying} - \text{mass after drying}) / \text{mass before drying}] \times 100$$

The dehydrated and dried microfiber cellulose may optionally contain a resin other than the non-interactive powder in the form of a resin powder. With such a resin, hydrogen bonding between the molecules of the dehydrated and dried microfiber cellulose may be blocked, which enhances dispersibility in the resin during kneading.

The resin contained in the dehydrated and dried microfiber cellulose may be in the form of, for example, powder, pellets, sheets, or the like, with powder (powdered resin) being preferred.

When in the powdered form, the resin powder contained in the dehydrated and dried microfiber cellulose has an average particle size of preferably 1 to 10000 μm, more preferably 10 to 5000 μm, particularly preferably 100 to 1000 μm. With an average particle size over 10000 μm, the resin powder may not be able to be placed in a kneader for its large particle size. With an average particle size of less than 1 μm, the resin powder may be too fine to block the hydrogen bonding between the molecules of the microfiber cellulose. The resin used here, such as the powdered resin, may be the same kind as or different kind from the resin to be kneaded with the microfiber cellulose (the resin as a primary raw material), with the same kind being preferred.

The resin powder having an average particle size of 1 to 10000 μm is preferably mixed in the aqueous dispersion before the dehydration and drying. By mixing in the aqueous dispersion, the resin powder may be homogeneously dispersed among the fibers of the microfiber cellulose, which facilitates homogeneous dispersion of the microfiber cellulose in the kneaded composite resin, to provide further improvement in strength properties.

The fibrous cellulose-containing material thus obtained (reinforcing material for resins) is kneaded with a resin, to thereby obtain a fibrous cellulose composite resin. The kneading may be performed by, for example, mixing the resin in the form of pellets with the reinforcing material, or by first melting the resin to obtain a molten product and then mixing the reinforcing material into the molten product. The acid-modified resin, the dispersant, and the like may be added at this stage.

For the kneading treatment, one or more members may be selected and used from the group consisting of, for example, single-screw or multi-screw (with two or more screws) kneaders, mixing rolls, kneaders, roll mills, Banbury mixers, screw presses, and dispersers. Among these, multi-screw kneaders with two or more screws are preferably used. Two or more multi-screw kneaders with two or more screws, arranged in parallel or in series, may also be used.

The temperature for the kneading treatment is the glass transition temperature of the resin or higher and may depend on the type of the resin, and is preferably 80 to 280 °C, more preferably 90 to 260 °C, particularly preferably 100 to 240 °C.

As the resin, at least either one of a thermoplastic resin or a thermosetting resin may preferably be used.

As a thermoplastic resin, one or more resins may be selected and used from the group consisting of, for example, polyolefins, such as polypropylene (PP) and polyethylene (PE), polyester resins, such as aliphatic polyester resins and aromatic polyester resins, polystyrenes, polyacrylic resins, such as methacrylates and acrylates, polyamide resins, polycarbonate resins, and polyacetal resins.

It is preferred, however, to use at least either one of polyolefins and polyester resins. Polyolefins may preferably be polypropylenes. Polyester resins may be aliphatic polyester resins, such as polylactic acid or polycaprolactone, or aromatic polyester resins, such as polyethylene terephthalate, and biodegradable polyester resins (also referred to simply as "biodegradable resins") may preferably be used.

As the biodegradable resin, one or more members may be selected and used from the group consisting of, for example, hydroxycarboxylic acid-based aliphatic polyesters, caprolactone-based aliphatic polyesters, and dibasic acid polyesters.

As the hydroxycarboxylic acid-based aliphatic polyester, one or more members may be selected and used from the group consisting of, for example, homopolymers of a hydroxycarboxylic acid, such as lactic acid, malic acid, glucose acid, or 3-hydroxybutyric acid, and copolymers using at least one of these hydroxycarboxylic acids. It is preferred to use polylactic acid, a copolymer of lactic acid and any of the hydroxycarboxylic acids other than lactic acid, polycaprolactone, or a copolymer of caprolactone and at least one of the hydroxycarboxylic acids, and particularly preferred to use polylactic acid.

The lactic acid may be, for example, L-lactic acid or D-lactic acid, and a single kind or a combination of two or more kinds of these lactic acids may be used.

As the caprolactone-based aliphatic polyester, one or more members may be selected and used from the group consisting of, for example, homopolymers of polycaprolactone, and copolymers of polycaprolactone or the like and any of the hydroxycarboxylic acids mentioned above.

As the dibasic acid polyester, one or more members may be selected and used from the group consisting of, for example, polybutylene succinates, polyethylene succinates, and polybutylene adipates.

A single kind alone or a combination of two or more kinds of the biodegradable resins may be used.

Examples of the thermosetting resins may include phenol resins, urea resins, melamine resins, furan resins, unsaturated polyesters, diallyl phthalate resins, vinyl ester resins, epoxy resins, polyurethane-based resins, silicone resins, and thermosetting polyimide-based resins. A single kind or a combination of two or more kinds of these resins may be used.

The resin may contain an inorganic filler, preferably at a ratio that does not disadvantageously affect thermal recycling.

Examples of the inorganic filler may include, for example, simple substances of metal elements belonging to Groups I to VIII of the Periodic Table, such as Fe, Na, K, Cu, Mg, Ca, Zn, Ba, Al, Ti, or a silicon element; oxides thereof, hydroxides thereof, carbonates thereof, sulfates thereof, silicates thereof, or sulfites thereof; and various clay minerals formed of these compounds.

Specific examples of the inorganic filler may include, for example, barium sulfate, calcium sulfate, magnesium sulfate, sodium sulfate, calcium sulfite, zinc oxide, silica, heavy calcium carbonate, light calcium carbonate, aluminum borate, alumina, iron oxide, calcium titanate, aluminum hydroxide, magnesium hydroxide, calcium hydroxide, sodium hydroxide, magnesium carbonate, calcium silicate, clay wollastonite, glass beads, glass powder, silica sand, silica stone, quartz powder, diatomaceous earth, white carbon, and glass fibers. A plurality of these inorganic fillers may be contained. The inorganic filler may be one contained in de-inked pulp.

The content percentages of the fibrous cellulose (microfiber cellulose) and the resin are preferably 1 to 80 mass% of the fibrous cellulose and 20 to 90 mass% of the resin, more preferably 5 to 60 mass% of the fibrous cellulose and 30 to 80 mass% of the resin, particularly preferably 10 to 50 mass% of the fibrous cellulose and 40 to 70 mass% of the resin. It is assumed that, at a relatively lower content percentage of the fibrous cellulose, interaction among the reinforcing fibers is lost, resulting in reinforcement of a resin with respective single fibers, and thus insufficient exertion of the reinforcing effect. In contrast, it is assumed that, at a relatively higher content percentage of the fibrous cellulose, the interaction among the reinforcing fibers occurs, which causes the fibers to supplement each other in reinforcibility, in addition to the reinforcibility of respective single fibers, resulting in sufficient exertion of the reinforcing effect on the resin.

It is noted that the ratio of the fibrous cellulose and the resin contained in the eventually obtained resin composition is usually the same as the mixing ratio of the fibrous cellulose and the resin mentioned above.

The difference in solubility parameter $(cal/cm^3)^{1/2}$ (SP value) between the microfiber cellulose and the resin, that is, supposing that the SP value of the microfiber cellulose is $SP_{MFC}$ value and the SP value of the resin is $SP_{POL}$ value, the difference in SP value may be obtained by the formula: Difference in SP value = $SP_{MFC}$ value - $SP_{POL}$ value. The difference in SP value is preferably 10 to 0.1, more preferably 8 to 0.5, particularly preferably 5 to 1. With a difference in SP value over 10, the microfiber cellulose is not dispersed in the resin, and thus the reinforcing effect may not be obtained. With a difference in SP value below 0.1, the microfiber cellulose is disadvantageously dissolved in the resin and does not function as a filler, so that the reinforcing effect cannot be obtained. In this regard, a smaller difference between the $SP_{POL}$ value of the resin (solvent) and the $SP_{MFC}$ value of the microfiber cellulose (solute) indicates higher reinforcing effect.

It is noted that the solubility parameter $(cal/cm^3)^{1/2}$ (SP value) refers to a scale of solvent/solute intermolecular force, and a solvent and a solute having closer SP values result in higher solubility.

(Molding Process)

The kneaded product of the fibrous cellulose-containing material and the resin may be molded into a desired form, following another kneading, if necessary. The size, thickness, form, and the like resulting from the molding are not particularly limited, and the molded product may be in the form of, for example, sheets, pellets, powders, or fibers.

The temperature during the molding process is at or higher than the glass transition point of the resin, and may be, for example, 90 to 260 °C, preferably 100 to 240 °C, depending on the kind of the resin.

The kneaded product may be molded by, for example, die molding, injection molding, extrusion molding, hollow molding, or foam molding. The kneaded product may be spun into a fibrous shape, mixed with plant materials or the like, and formed into a mat shape or a board shape. The mixing may be performed by, for example, simultaneous deposition by air-laying.

As a machine for molding the kneaded product, one or more machines may be selected and used from the group consisting of, for example, injection molding machine, a blow molding machine, a hollow molding machine, a blow molding machine, a compression molding machine, an extrusion molding machine, a vacuum molding machine, and a pressure molding machine.

The molding discussed above may be performed following the kneading, or by first cooling the kneaded product, chipping the cooled product in a crusher or the like, and then introducing the resulting chips in a molding machine, such as an extrusion molding machine or an injection molding machine. It is noted that the molding is not an essential requirement of the present invention.

(Other Components)

The fibrous cellulose may contain cellulose nanofibers, together with the microfiber cellulose. Cellulose nanofibers are fine fibers, like microfiber cellulose, and have a role to complement the microfiber cellulose in enhancing the strength of resins. However, the fine fibers are preferably only the microfiber cellulose without cellulose nanofibers, where possible. Note that the average fiber diameter (average fiber width, or average of diameters of single fibers) of the cellulose nanofibers is preferably 4 to 100 nm, more preferably 10 to 80 nm.

Further, the fibrous cellulose may contain pulp. Pulp has a role to remarkably improve the dewaterability of a cellulose fiber slurry. Like the cellulose nanofibers, however, it is most preferred that the pulp is also not contained, that is, at a content percentage of 0 mass%.

In addition to the fine fibers and pulp or the like, the resin composition may contain or may be caused to contain fibers derived from plant materials obtained from various plants, such as kenaf, jute hemp, manila hemp, sisal hemp, ganpi, mitsumata, mulberry, banana, pineapple, coconut, corn, sugar cane, bagasse, palm, papyrus, reed, esparto, survival grass, wheat, rice, bamboo, various kinds of softwood (cedar, cypress, and the like), hardwood, and cotton.

In the resin composition, one or more members selected from the group consisting of, for example, antistatic agents, flame retardants, antibacterial agents, colorants, radical scavengers, and foaming agents may be added without disturbing the effects of the present invention. These materials may be added to the dispersion of the fibrous cellulose, added while the fibrous cellulose and the resin are kneaded, added to the resulting kneaded product, or added otherwise. In view of the manufacturing efficiency, these materials may preferably be added while the fibrous cellulose and the resin are kneaded.

The resin composition may contain, as a rubber component, ethylene/$\alpha$-olefin copolymer elastomers or styrene-butadiene block copolymers. Examples of $\alpha$-olefins may include butene, isobutene, pentene, hexene, methylpentene, octene, decene, and dodecene.

EXAMPLES

Next, Examples of the present invention will be discussed.

Softwood kraft pulp having a moisture percentage of 10% or lower, an aqueous solution of urea having 10% solid concentration, and a 20% aqueous solution of citric acid were mixed at a mass ratio in terms of solids as shown in Table 1, and dried at 105 °C. Then the resulting mass was subjected to heat treatment at the reaction temperature of 140 °C for the reaction time of 3 hour to obtain carbamate-modified pulp. The carbamate-modified pulp thus obtained was diluted with distilled water, stirred, and dewatered to wash, which was repeated twice. The washed carbamate-modified pulp was beaten in a Niagara beater for 4 hours to obtain carbamate-modified microfiber cellulose. In this regard, however, in Test Example 3, the unmodified pulp was diluted with distilled water, stirred, and dewatered to wash, which was repeated twice. The washed unmodified pulp was beaten in a Niagara beater for 4 hours to obtain microfiber cellulose. Further, the values in Referential Example were obtained using TEMPO-oxidized cellulose fibers, which was said to have a lower heat resistance.

Each microfiber cellulose thus obtained was prepared into an aqueous dispersion having a solid concentration

of 2 wt%, to which 5 g of maleic anhydride modified polypropylene and 85 g of polypropylene powder were added, and the resulting mass was dried under heating to obtain a carbamate-modified microfiber cellulose-containing material. The moisture percentage of this carbamate-modified microfiber cellulose-containing material was less than 10%. The carbamate-modified microfiber cellulose-containing material was kneaded in a twin-screw kneader at 180 °C at 200 rpm to obtain a carbamate-modified microfiber cellulose composite resin. This composite resin was cut in a pelleter into cylinders of 2 mm diameter and 2 mm long, and injection-molded at 180 °C into a cuboid test piece (59 mm long, 9.6 mm wide, and 3.8 mm thickness). Each test piece thus obtained was subjected to determination of flexural modulus and bending strength, and the results are shown in Table 1. Further, in the Table, the average fiber lengths of the cellulose fibers before and after the defibration, and the 5% weight-loss temperature were also indicated. Note that the flexural modulus and the bending strength were determined in accordance with JIS K 7171: 1994. The flexural modulus (blank: (1.4 Gpa)) and the bending strength (blank: (53.4 Mpa)) were each indicated by a ratio with respect to the resin per se being 1. The average fiber length and the 5% weight-loss temperature were indicated as mentioned above.

Table 1

| | Pulp | Urea | Citric acid | Substitution rate | Average fiber length before defibration | Average fiber length after defibration | 5% Weight-loss temperature | Flexural modulus | Bending strength |
|---|---|---|---|---|---|---|---|---|---|
| | Parts by mass | Parts by mass | Parts by mass | mmol/g | mm | mm | °C | Ratio to blank | Ratio to blank |
| Test Example 1 | 5 | 1 | 0.008 | 1.64 | 1.95 | 0.95 | 278 | 1.6 | 1.3 |
| Test Example 2 | 5 | 5 | 0.04 | 2.88 | 0.87 | 0.20 | 250 | 1.4 | 1.2 |
| Test Example 3 | 1 | 0 | 0 | 0 | 2.05 | 0.31 | 275 | 1.3 | 1.2 |
| Referential Example | | | | | | | 222 | | |

<Discussion>

The 5% weight-loss temperature was higher in all of Text Examples 1 to 3 than the temperature in Referential Example. However, at a substitution rate over 2.0 mmol/g, the 5% weight-loss temperature was lowered.

INDUSTRIAL APPLICABILITY

The present invention is applicable as fibrous cellulose and fibrous cellulose composite resins.

## Claims

1. Fibrous cellulose

   having an average fiber width of 0.1 to 19 μm,
   having hydroxyl groups substituted with carbamate groups at a rate of substitution of 1.0 to 2.0 mmol/g, and
   having an average fiber length of 0.10 mm or longer.

2. The fibrous cellulose according to claim 1,
   wherein a 5% weight-loss temperature in heating from 105 °C to 350 °C at a rate of 5 °C per minute in absolutely dry state is 240 °C or higher.

3. A fibrous cellulose composite resin comprising the fibrous cellulose according to claim 1 or 2, and a resin.

4. The fibrous cellulose composite resin according to claim 3,
   wherein a content percentage of the fibrous cellulose is 1 to 80 mass%, and the content percentage of the resin is 20 to 90 mass%.

5. The fibrous cellulose composite resin according to claim 3 or 4,
   wherein part or all of the resin is an acid-modified resin.

**INTERNATIONAL SEARCH REPORT**

International application No.
**PCT/JP2021/020862**

**A. CLASSIFICATION OF SUBJECT MATTER**

***C08B 15/06***(2006.01)i; ***C08L 1/08***(2006.01)i; ***C08L 101/00***(2006.01)i; ***D06M 13/432***(2006.01)i
FI: C08B15/06; C08L101/00; C08L1/08; D06M13/432

According to International Patent Classification (IPC) or to both national classification and IPC

**B. FIELDS SEARCHED**

Minimum documentation searched (classification system followed by classification symbols)

C08B15/06; C08L1/08; C08L101/00; D06M13/432

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2019/221256 A1 (DAIO PAPER CORP.) 21 November 2019 (2019-11-21) claims, paragraphs [0028]-[0031], examples, table 2 | 1-5 |
| X | WO 2018/230600 A1 (KYOTO UNIVERSITY) 20 December 2018 (2018-12-20) claims, paragraphs [0018], [0030], [0032], [0066]-[0069], examples, table 1 | 1-5 |
| A | WO 2018/212012 A1 (DAIO PAPER CORP.) 22 November 2018 (2018-11-22) entire text | 1-5 |
| A | JP 2017-66272 A (OJI HOLDINGS CORPORATION) 06 April 2017 (2017-04-06) entire text | 1-5 |
| A | WO 2015/040884 A1 (DIC CORP.) 26 March 2015 (2015-03-26) entire text | 1-5 |
| P, A | WO 2020/203147 A1 (DAIO PAPER CORP.) 08 October 2020 (2020-10-08) entire text | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 June 2021** | **06 July 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/020862**

| Patent document cited in search report | Publication date (day/month/year) | Patent family member(s) | Publication date (day/month/year) |
|---|---|---|---|
| WO 2019/221256 A1 | 21 November 2019 | JP 2019-199671 A | |
| WO 2018/230600 A1 | 20 December 2018 | JP 2019-1876 A<br>US 2020/0115471 A1<br>claims, paragraphs [0022], [0039], [0041], [0080]-[0083], examples, table 1<br>EP 3640265 A1<br>CN 110741020 A<br>KR 10-2020-0019687 A | |
| WO 2018/212012 A1 | 22 November 2018 | JP 2018-193440 A<br>US 2020/0063292 A1<br>EP 3626749 A1<br>CN 110582516 A<br>KR 10-2020-0007780 A | |
| JP 2017-66272 A | 06 April 2017 | (Family: none) | |
| WO 2015/040884 A1 | 26 March 2015 | US 2016/0137751 A1<br>entire text<br>EP 3048118 A1<br>CN 104903353 A | |
| WO 2020/203147 A1 | 08 October 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5656100 B
- JP 2019001876 A